## Europäisches Patentamt
## European Patent Office
## Office européen des brevets

(11) Veröffentlichungsnummer: **0 118 051**
**B1**

(12) # EUROPÄISCHE PATENTSCHRIFT

(45) Veröffentlichungstag der Patentschrift:
03.02.88

(51) Int. Cl.⁴: **F 01 D 25/26**

(21) Anmeldenummer: **84101268.5**

(22) Anmeldetag: **06.02.84**

(54) Verbindung zwischen warmen und kalten Teilen bei ungekühlten Abgasturboladern.

(30) Priorität: **04.03.83  CH 1191/83**

(43) Veröffentlichungstag der Anmeldung:
**12.09.84 Patentblatt 84/37**

(45) Bekanntmachung des Hinweises auf die Patenterteilung:
**03.02.88 Patentblatt 88/5**

(84) Benannte Vertragsstaaten:
**CH DE FR GB LI**

(56) Entgegenhaltungen:
**BE-A-674 025**
**CH-A-112 678**
**DE-A-1 918 858**
**DE-C-768 036**
**DE-C-1 220 671**
**FR-A-967 527**
**FR-A-2 316 467**
**GB-A-733 537**
**GB-A-813 399**

(73) Patentinhaber: **BBC Aktiengesellschaft Brown, Boveri & Cie., Haselstrasse, CH- 5401 Baden (CH)**

(72) Erfinder: **Häni, August, Jurastrasse 11, CH- 5300 Turgi (CH)**
Erfinder: **Hörler, Hansulrich, Dr., Lerchenberg 5, CH- 8046 Zürich (CH)**
Erfinder: **Perego, Ambrogio, Bahnhofstrasse 103 D, CH- 5430 Wettingen (CH)**

LIBER, STOCKHOLM 1988

## Beschreibung

Die Erfindung betrifft einen ungekühlten Abgasturbolader gemäss Oberbegriff des Anspruchs 1.

Ungekühlte Abgasturbolader sind energieumwandelnde Maschinen, bei welchen die gasführenden Kanäle nicht gekühlt werden. Um eine maximale Ausnützung der Abgasenergie bei Dieselmotoranlagen zu erzielen, werden von Kunden immer mehr ungekühlte Turbolader verlangt. Die Umgehung der Wärmeabführung durch Kühlung, ermöglicht die Erzielung eines höheren Wirkungsgrades der Turbine und überdies eine qualitativ bessere Ausnützung der Abgasenergie nach dem Lader. Diese letztere Überlegung dann, wenn statt nur Warmwasseraufbereitung auch Dampf erzeugt werden könnte. Die Bedingung für den Betrieb von ungekühlten Abgasturboladern ist dabei, dass die Gehäuseaussentemperatur, also die Temperatur des äusseren Abgasturboladerkörpers, unterhalb 200° C bleibt. Durch den Wegfall der durch Kühlung abgeführten Wärmemenge, geht dem Heissgasstrom eines ungekühlten Abgasturboladers, bis zur Expansion in der Turbine, wenig Wärme verloren. Da somit die Turbineneintrittstemperatur höher liegt, steigt der thermische Wirkungsgrad der Maschine und bei gleichbleibender Abgasmenge, auch die an den Luftverdichter abgegebene Leistung.

Durch die hohen Temperaturen von über 500° C, die im Gaseintrittskanal vorliegen, entstehen aus unterschiedlich grossen Wärmedehnungen stationäre und instationäre Spannungen, insbesondere dort, wo die warmen Innenteile des Abgasturboladers mit dem kalten Tragkörper verbunden sind. An die Verbindung zwischen warmen und kalten Teilen werden daher folgende Anforderungen gestellt:

1. Aufnahme der Wärmedehnungsunterschiede, ohne hierzu allzugrosse Spannungen im Tragkörper zu erzeugen.

2. Erhalten der Ursprungskonzentrizität der rotierenden Turbine sowie der angrenzenden Statorteile bei allen Betriebstemperaturen, insbesondere im Anfahrstadium.

3. Die Kräfte, die vom Gasdruck und Anbausystem auf die Gaskanäle wirken, müssen auf direktestem Weg in die tragenden Partien der Maschine eingeleitet werden.

4. Um die maximal zulässige Gehäuseaussentemperatur zu unterschreiten ist die Verbindung so zu gestalten, dass die Bildung von Wärmebrücken vermieden wird.

5. Die Gaskanäle und deren Verbindungsflanschen müssen gegen aussen gasdicht sein.

Indessen ist es so, dass der Anforderung nach Erhaltung der Ursprungskonzentrizität der rotierenden Turbine sowie der angrenzenden Statorteile bei allen Betriebstemperaturen, insbesondere im Anfahrstadium und in den transienten folgenden Betriebsbereichen, absolute Priorität zukommt. Gelingt es nämlich dieser Anforderung befriedigend nachzukommen, dann lassen sich die restlichen obenerwähnten Anforderungen leicht erstellen.

Aus BE-A-674 025 geht eine Lehre hervor, welche die axiale Verschiebung von Lauf- und Leitschaufeln zueinander zu eliminieren trachtet. Abgesehen davon, dass vorliegend keine Mittigkeit des Gaseintrittskanals gegenüber dem Tragkörper selbst in den transienten Betriebsbereichen angestrebt wird, geht die nach BE-A-674 025 vorgeschlagene Lösung davon aus, dass der Leitschaufelträger - zumindest abströmungsseitig - die gleiche Wärmedehnung wie die Leitschaufeln mitmacht, was praktisch nicht der Fall ist. Auch sollte die Lösung die Voraussetzung erfüllen, dass der Kegelmantel, als Verbindung zwischen Leitschaufelträger und Tragkörper, keiner axialen Wärmedehnung unterworfen wäre, was nie der Fall sein kann.

Die axialen Kräfte gemäss vorgeschlagener Lösung nach BE-A-674 025 liessen sich durch die formsteife Fixpunktausführung nur dann auffangen, wenn der Kegelmantel während des ganzen Betriebes homogen bleibt. Dann wäre aber eine intensive Abkühlung vonnöten. Kann der axialen Verschiebung mit den vorgeschlagenen Mitteln nicht Einhalt geboten werden, so wird auch die Ursprungsmittigkeit aus denselben Überlegungen parallel in Mitleidenschaft gezogen.

Zwar wird aus CH-A-112 678 eine Lösung vorgeschlgen, welche das Ziel verfolgt, Temperaturunterschiede zwischen dem warmen angeströmten Gehäuse und dessen kalten Lagerung aufzufangen, dargestalt, dass die bei Kaltzustand erstellte Mittigkeit des Anströmungsgehäuses gegenüber dem beschaufelten Rotor erhalten bleibt. Indessen handelt es sich nicht um eine radial, sondern um eine axial angeströmte Maschine. Lösungen zur Aufrechterhaltung der Mittigkeit bei der axial angeströmten Maschine gemäss CH-A-112 678 lassen sich nicht auf eine radial angeströmte Maschine übertragen. So wird die Kraftaufnahme in der Druckschrift CH-A-112 678 nur durch mindestens zwei in der Vertikalebene befindlichen Keile aufgenommen. Die in der waagrechen Ebene liegenden Keile sind durch die Anströmungskräfte überhaupt nicht belastet, was sich unweigerlich ändert, wenn die Maschine radial angeströmt wird. Dann muss aber die Fixierung in der Vertikalebene neue Aufgaben übernehmen.

Hier will die Erfindung eingreifen und Abhilfe schaffen.

Der Erfindung, wie sie in den Ansprüchen gekennzeichnet ist, liegt die Aufgabe zugrunde, bei einem Abgasturbolader der eingangs genannten Art die Temperaturunterschiede zwischen dem warmen angeströmten Gehäuse und dessen kalten Lagerung aufzufangen, so dass die bei Kaltzustand erstellte Mittigkeit des Anströmungsgehäuses gegenüber dem beschaufelten Rotor erhalten bleibt. Gleichzeitig soll auch die Aufgabe erfüllt werden, die axiale Lage der warmen Teile gegenüber dem Tragkörper zu erhalten.

Die Ursprungskonzentrizität der rotierenden Turbine und der angrenzenden Statorteile, wonach jene Konzentrizität, die anfänglich bei dem Abgasturbolader gewollt erstellt wird, soll bei allen Betriebsemperauren erhalten bleiben. Die Gefahr des Verlustes der Konzentriziät taucht dabei während des Anfahrens markant auf. Insbesondere während dieser bezüglich Temperaturverlaufes nicht homogene Periode ist es wichtig, dass die Verbindung die ihr zugedachte Aufgabe auch zu erfüllen vermag. Dies ist nur der Fall, wenn die Verbindung sich "wachstumsnachgiebig" verhält.

Erfindungsgemäss wird dieses Ziel, nämlich die Erhaltung der Mittigkeit, durch die Merkmale des kennzeichnenden Teiles des Anspruchs 1 erreicht. Die horizontalen Pratzen, welche sich auf Konsolen des Tragkörpers frei abstützen, werden voll mit der Kraft des Anströmungsdruckes belastet. Danebst wird die Mittigkeit des Gaseintrittskanals zum Tragkörper nur durch einen einzigen Zentriernocken aufrechterhalten, der diametral gegenüberliegend zum Anströmungsstutzen des Gaseintrittskanals liegt und in einer Aussparung des Tragkörpers geführt ist. Unabhängig davon, ob unterschiedliche Wärmedehnungen vorliegen, oder ob die Anströmungskräfte nicht in der Ebene des Zentriernockens angreifen, bewirkt eben dieser Zentriernocken stets eine Entlastung der stärker belasteten Seite, so dass die Mittigkeit erhalten bleibt und die Pratzen ausgleichenden Verschiebungen unterworfen sind.

Vorteilhaft und zweckmässige Weiterbildungen der erfindungsgemässen Aufgabenlösungen sind in den abhängigen Patentansprüchen gekennzeichnet.

Im folgenden sind anhand der Figuren Ausführungsbeispiele der erfindungsgemässen Verbindungen schematisch dargestellt und näher erläutert. Alle für das Verständnis der Erfindung unwesentlichen Elemente sind nicht dargestellt. Gleiche Elemente sind in den verschiedenen Figuren mit gleichen Bezugsziffern versehen.

Es zeigt:

Fig. 1 eine schematische Ansicht eines ungekühlten Abgasturboladers,

Fig. 2 die Kräfteeinwirkungen bei einem ungekühlten Abgasturbolader mit Pratzen und Nocken am Gaseintrittskanal,

Fig. 3 eine Seitenansicht aus Fig. 2,

Fig. 4 eine weitere Variante eines ungekühlten Abgasturboladers mit Pratzen und Nocken am Gaseintrittskanal,

Fig. 5 eine Ansicht V-V aus Fig. 4,

Fig. 6 eine weitere Variante eines ungekühlten Abgasturboladers mit Pratzen,

Fig. 7 eine Ansicht VII-VII aus Fig. 6,

Fig. 8 eine weitere Variante eines ungekühlten Abgasturboladers mit Pratzen,

Fig. 9 eine Ansicht IX-IX aus Fig. 8,

Fig. 10 eine axiale Arretierung durch oberen Kragen eines ungekühlten Abgasturboladers mit Pratzen,

Fig. 11 den Ausgangszustand zu Fig. 10, 12,

Fig. 12 eine axiale Arretierung durch unteren Kragen eines ungekühlten Abgasturboladers mit Pratzen,

Fig. 13 eine Ansicht XIII-XIII aus Fig. 10, 12,

Fig. 14 eine weitere Variante eines ungekühlten Abgasturboladers mit Pratzen und

Fig. 15 eine Ansicht XV-XV aus Fig. 14.

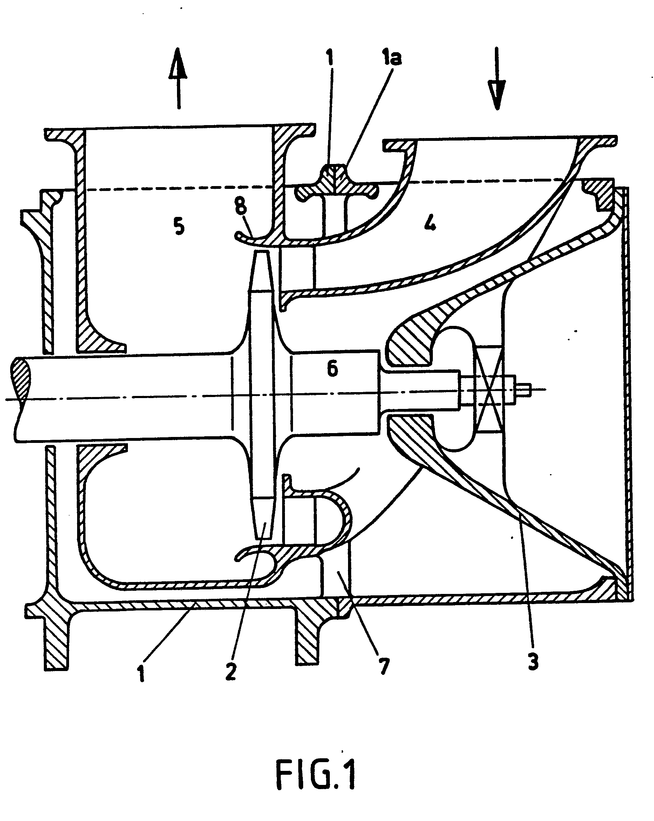

Fig. 1 zeigt die schematische Darstellung eines ungekühlten Abgasturboladers. Diese erhebt lediglich den Anspruch, vereinfacht zu zeigen, welche Elemente des Abgasturboladers mit der Erfindung in Zusammenhang stehen und demnach auch angesprochen werden. Aus dem Gesagten geht hervor, dass es sich hier um eine Prinzipskizze handelt, die aber für das Verständnis der nachfolgenden Figuren gute Dienste leisten kann. Des Turbinenlaufrad 2 ist über einen Gaseintrittskanal 4 an die nicht dargestellte Auspuffleitung eines ebenfalls nicht gezeigten Diesel-Motors angeschlossen. Die Turbinenwelle 6 ist heissgasseitig in einem Lagergehäuse 3 auf bekannte Weise gelagert. Der äussere kalte Tragkörper 1 trägt ebendieses Lagergehäuse 3. Die äussere Schale des Abgasturboladers besteht aus zwei zusammengesetzten Tragkörpern 1, 1a. Nach der erfolgten Entspannung in der Turbine 2 strömt das Gas über einen Abgaskanal 5 einem weiteren nicht dargestellten Verbraucher zu. Die Verbindung 7, zwischen warmen und kalten Teilen bildet das Kernproblem dieser Maschine und ist Gegenstand der Erfindung, wobei diese Verbindung 7 in Fig. 1 lediglich im Sinne einer Abstraktion dargestellt ist.

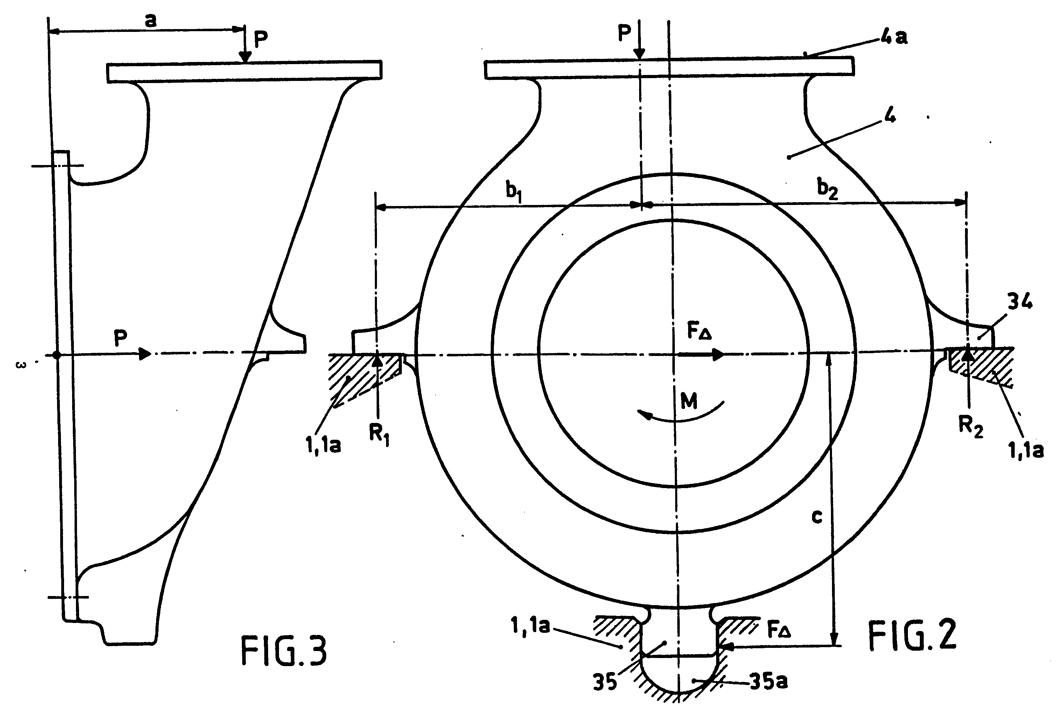

Fig. 2 und 3 dienen der allgemeinen Erläuterung und dem besseren Verständnis über die hier neu angewendete Technik, die anhand von Beispielen in den nachfolgenden Figuren beschrieben wird. In Fig. 2 und 3 ist der Gaseintrittskanal 4 mit Pratzen 34 versehen, welche die durch den Gasdruck hervorgerufenen Reaktionskräfte P samt Stutzenanschlusskräfte in die Konsolen $R_1$ und $R_2$ des Tragkörpers 1, 1a einleiten. Der Zentriernocken 35 sitzt in einer entsprechenden Aussparung 35a des Tragkörpers 1, 1a und garantiert die Mittigkeit des Gaseintrittskanals 4 zum Tragkörper 1, 1a. Pratzen 34 und Zentriernocken 35 bestimmen die Achse des Gaseintrittskanals 4, dessen relative Lage zum Tragkörper 1, 1a, wie nachfolgend noch erläutert wird, trotz Wärmedehnungen unverändert bleibt. Aus Fig. 2 geht hervor, dass die Reaktionskraft P am Anströmungsstutzen 4a zum Beispiel nicht mittig angreift. Aus der Statik sind die Auflagenkräfte in den Konsolen: In $R_1 = \frac{P \cdot b_2}{b_1 + b_2}$ und in $R_2 = \frac{P \cdot b_1}{b_1 + b_2}$; daraus lässt sich ableiten, dass im dargestellten Beispiel die Kraft $R_1$ grösser ist als die in $R_2$. Bedingt durch Wärmedehnungen müsste der Mittelpunkt des Gaseintrittskanals demnach sich Richtung $R_2$

verschieben. Auch selbst wenn die Kraft P mittig angreifen würde, wäre eine Verschiebung des Mittelpunktes des Gaseintrittskanals 4 in einer Richtung praktisch nicht zu vermeiden, denn man müsste davon ausgehen, dass Reibungskoeffiziente in $R_1$ und $R_2$ verschiedene Werte hätten ($\mu_1 \neq \mu_2$). Geht man davon aus, dass $R_1 = R_2$ ist und $\mu_1 > \mu_2$ sei, so wäre die Reibungskraftdifferenz $F\Delta = (R_1 \cdot \mu_1) - (R_2 \cdot \mu_2)$. Durch die Anbringung eines Zentriernockens 35 wird dem entgegengesteuert. Das Moment M, aus dem Produkt $F\Delta \cdot$ Abstand c, entlastet die stärker belastete Seite, in unserem Fall $R_1$, so dass von einem selbstregulierendem Dispositiv gesprochen werden kann.

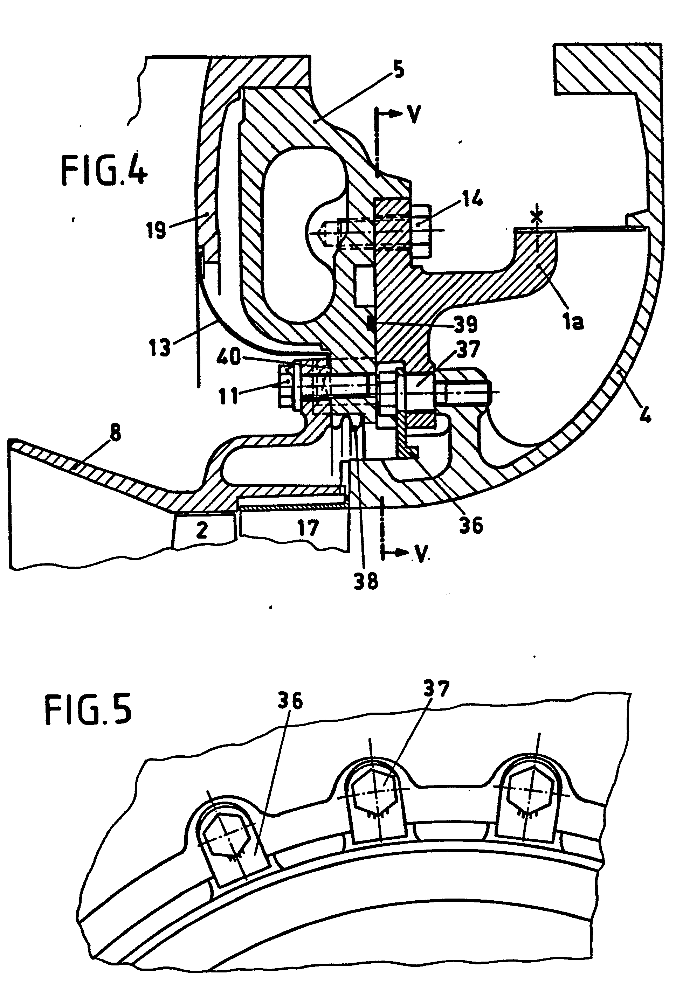

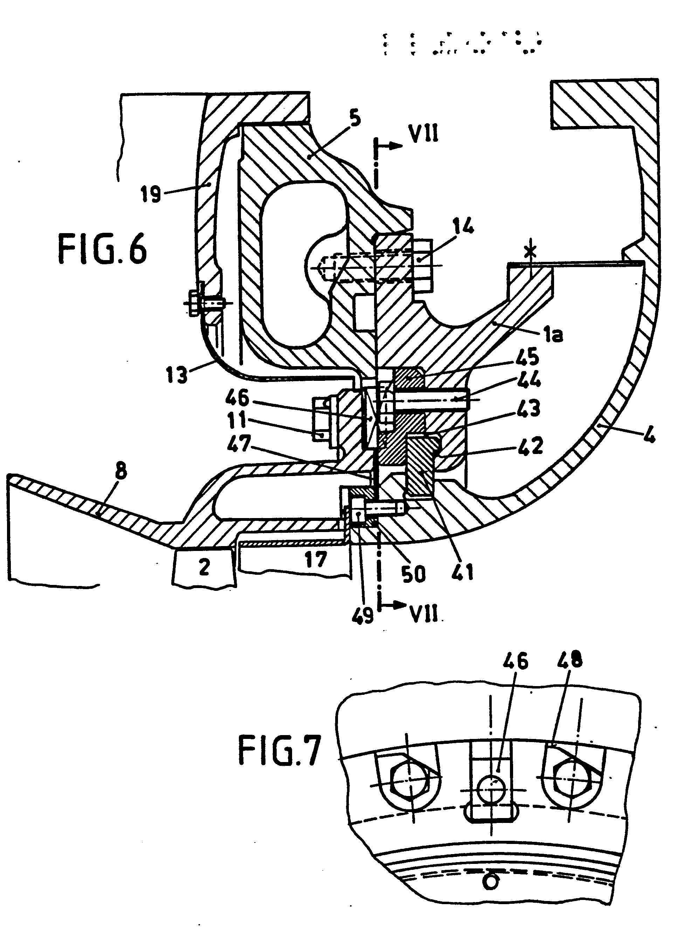

Fig. 4 und 5 knüpfen, bezüglich Abstützung des Gaseintrittskanals 4, an Fig. 2, 3 an. Der Gaseintrittskanal 4 ist also auf Pratzen abgestützt, welche zusammen mit dem Nocken die Achsen des Gaseintrittskanals 4 bestimmen. Die Schulterschrauben 37 - mindestens drei auf den Umfang verteilt - übernehmen die axiale Arretierung des Gaseintrittskanals 4 gegenüber Abgaskanal 5 und Turbinenabdeckring 8. Unter den Schraubenköpfen der Schulterschrauben 37 ist ein Mitnehmerplättchen 36 eingebaut - beispielsweise durch örtliche Anschweissung mit dem Schraubenkopf der Schulterschraube 37 - welches die Dehnungen des Gaseintrittskanals 4 in radialer Richtung mitmacht und dadurch bewirkt, dass die Schulterschrauben 37 vor Biegebeanspruchung geschont werden. Der Turbinenabdeckring 8 ist am Abgaskanal 5 mittels Verschraubung 11 montiert. Im Abgaskanal 5 sind in Umfangsrichtung mindestens drei Bolzen 40 eingepresst. Die über den Abgaskanal 5 turbinenabdeckringseitig herausragende Partie ist zweiflächig ausgebildet, dargestalt, dass die Flächen diametral entgegengesetzt sind. Im Turbinenabdeckring 8 sind, entsprechend der örtlichen Lage der Bolzen, Keilbahnen angebracht, welche der Führung der zweiflächigen vorderen Partie des Bolzens 40 dienen. Diese Führung ist toleranzmässig so ausgelegt, dass der Turbinenabdeckring 8, bedingt durch Wärmedehnungen, in radialer Richtung "wandern" kann. Die Dichtheit des Systems wird einmal durch das Dichtungselement 13 gesichert, das den Abgaskanal 5 schützt, weiter durch den zwischen Gaseintrittskanal 4, Turbinenabdeckring 8 und Abgaskanal 5 angebrachten Balg 38, der Mitnehmerplättchen 36 und Schulterschrauben 37 auf Dichtheit schützt und ferner durch den zwischen Tragkörper 1a und Abgaskanal plazierten Dichtungsring 39.

In Fig. 6 und 7 ist der Gaseintrittskanal 4 wiederum auf Pratzen abgestützt (vgl. hierzu die Erläuterungen unter Fig. 2, 3). Die axiale Arretierung des Gaseintrittskanals 4 gegenüber dem Tragkörper 1a geschieht, indem zwei oder mehrere Ringsegmente 41 in eine Nut des Gaseintrittskanals 4 eingelegt werden. Die Ringsegmente 41 werden durch den vollen Ring 45 mittels Verschraubung 44 verriegelt. Die Stufe 42 des Ringsegments 41 stützt sich auf die Flanke einer Nut im Tragkörper 1 ab und verhindert dadurch eine Durchbiegung der Ringsegmente beim Erkalten des Gaseintrittskanals 4. Der Turbinenabdeckring 8 wird am Verriegelungsring 45 gleitend befestigt; dort wo die Spannungen es zulassen, kann eine Zentrierung vorgesehen werden. Der Tragkörper 1a trägt ferner in Umfangsrichtung mindestens drei Keile 46. Im Turbinenabdeckring 8 sind, entsprechend der örtlichen Lage der Keile 46, Keilbahnen angebracht, welche der Führung der Keile 46 dienen. Die Führung ist toleranzmässig so ausgelegt, dass der Turbinenabdeckring 8, bedingt durch die auftretenden Wärmedehnungen, in radialer Richtung sich ausdehnen kann. Die einzelnen Ringsegmente 41 sind an der Trennfuge zueinander durch einen nicht dargestellten Distanzstift positioniert, der ein Umfangsrutschen der Ringsegmente 41 verhindert. Die Ringsegmente 41 weisen in radialer Richtung gegenüber dem Tragkörper 1a resp. Verriegelungsring 45 einen ca. 1 mm grossen Luftspalt 43 auf; dadurch wird den unterschiedlichen Wärmedehnungen Rechnung getragen. Die Verschraubungen 11, 44 sind mit Sicherungsblechen 48 gegen Loslösung gesichert werden. Andere Möglichkeiten sind selbstverständlich denkbar. Die Dichtheit des System wird durch das Dichtelement 13 bekannter Art und durch die zwischen Gaseintrittskanal 4, Turbinenabdeckring 8 und Verriegelungsring 45 angebrachte Dichtungsscheibe 47 bewerkstelligt. Die Arretierung der Dichtungsscheibe 47 in axialer Richtung geschieht durch die Verschraubung 49, wobei der Anpressring 50 für eine vernünftige Anpressfläche besorgt ist.

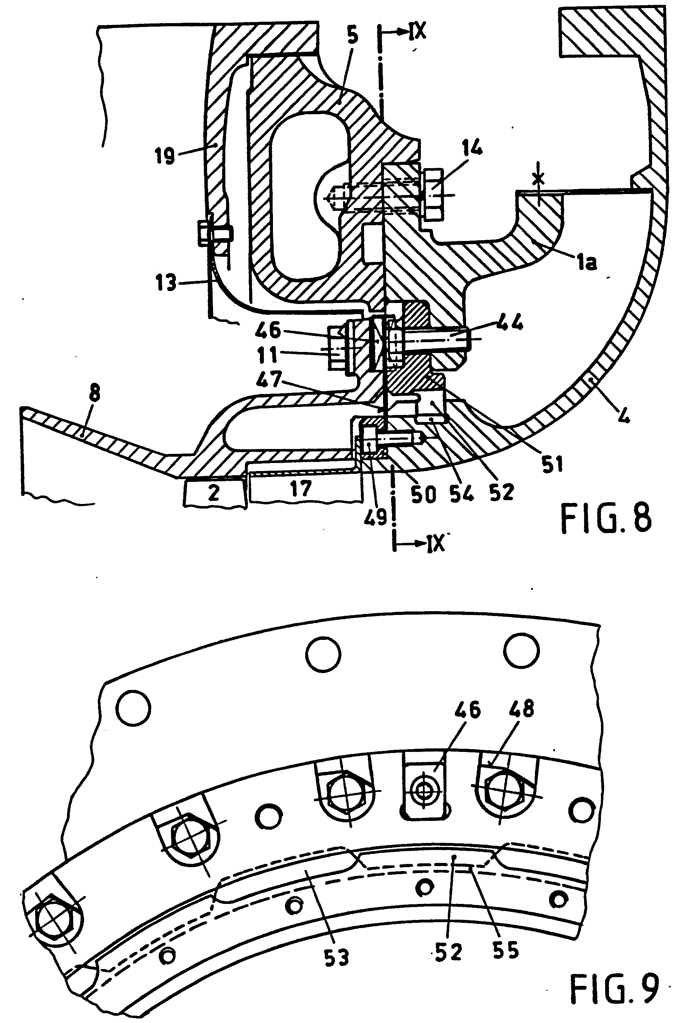

Bei Fig. 8, 9 ist der Gaseintrittskanal 4 wiederum auf Pratzen abgestützt (vgl. hierzu die Erläuterungen unter Fig. 2 und 3). Der Ring 51 wird am Tragkörper 1a mittels Verschraubung 44 verbunden. Der Gaseintrittskanal 4 weist eine Nute 54 auf. Diese ist umfangsmässig betrachtet intermittierend mit Aussparungen 53 versehen.

Der Ring 51 ist selber, analog zur Nute 54, mit intermittierenden Erhöhungen 52 ausgebildet, wobei die Sektorlänge der Erhöhung 52 in die Aussparung 53 einschiebbar ist. Bei der Montage des Ringes 51 werden die Erhöhungen 52 axial in die Aussparungen 53 eingeschoben; dann wird der Ring 51 um eine Aussparungsteilung gedreht, worauf die Erhöhungen 52 des Ringes 51 in die nicht ausgesparten Partien der Nute 54 des Gaseintrittskanals 4 zu liegen kommen. In diese Lage ist der Ring 51 gegenüber dem Gaseintrittskanal 4 durch den Bajonettverschluss axial bestimmt. Erst in dieser Lage wird der Ring 51 am Tragkörper 1a verschraubt. Die radiale Verschiebmöglichkeit des Turbinenabdeckringes 8 entspricht dem bereits unter Fig. 6, 7 beschriebenen System. Um die unterschiedlichen Wärmedehnungen in radialer Richtung zwischen Gaseintrittskanal 4 und Erhöhungen 52 des Ringes 51 auffangen zu können, ist die Nute 54 entsprechend mit einem Luftspalt 55 versehen.

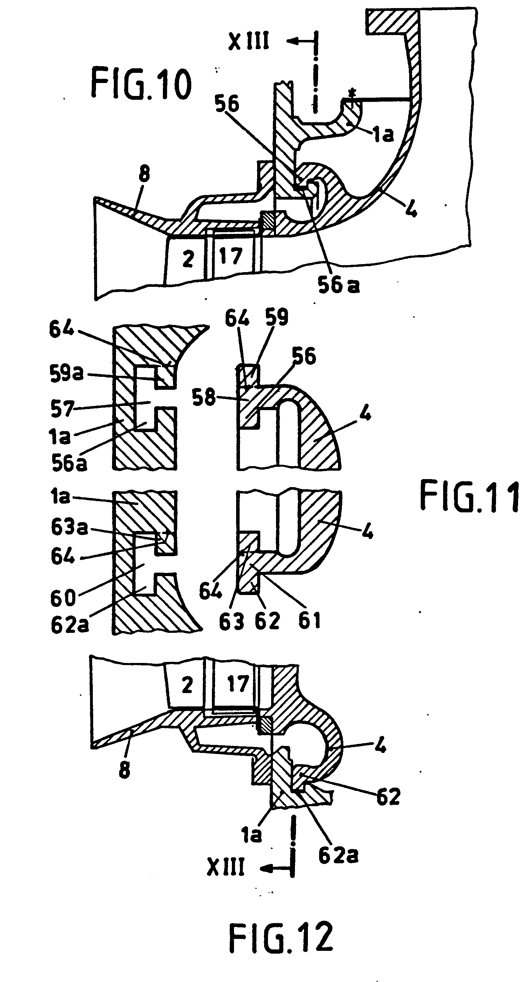

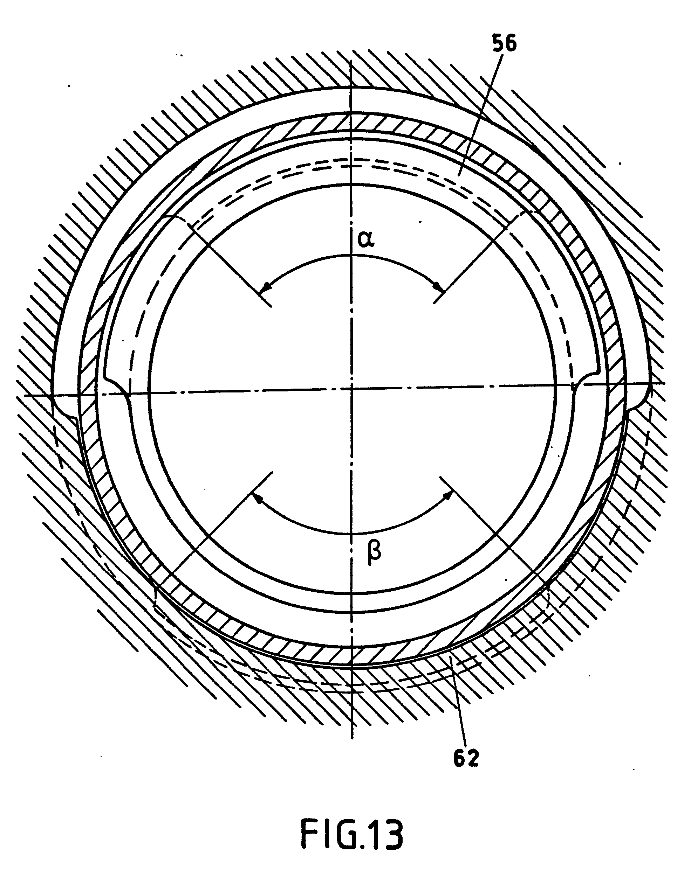

Fig. 10, 11, 12 und 13 bilden eine Einheit. Auszugehen ist von Fig. 11. In Fig. 11 ist der Ausgangszustand in bezug auf Tragkörper 1a und Gaseintrittskanal 4. Der Tragkörper 1a bekommt eine ringförmige T-Nut 57, 60, während der Gaseintrittskanal 4 in diesem Bereich mit einem T-Profil 58, 61 ausgebildet ist. Im Bereich der T-Nut-obere Hälfte 57 entfällt der Steg 59a entlang der gestrichelten Linie 64 für die ganze obere Kreishälfte; ebenso verfährt man mit dem Steg 63a der T-Nut-untere Hälfte 60. Im Bereich des T-Profils 61 wird der T-Profil-Innenschnabel-untere Hälfte 63 entlang der gestrichelten Linie 64 umfangsmässig entfernt, soviel, bis die T-Profil-Innenschnabel-obere Hälfte 56 nur noch aus einem Kragen besteht, dessen Sektorwinkel α ca. 90° betragen kann, wie dies aus Fig. 13 zum Ausdruck kommt. Analog hierzu verfährt man mit der T-Profil-Aussenachnabel-obere Hälfte 59, die entlang der gestrichelten Linie 64 abgefräst wird, soweit, bis die T-Profil-Aussenschnabel-untere Hälfte 62 aus einem Kragen besteht, dessen Sektorwinkel β ca. 120° betragen kann, wie dies aus Fig. 13 ersichtlich ist.

Wie in den vorhergehenden Beispielen ist der Gaseintrittskanal 4 auch hier auf Pratzen abgestützt. Die axiale Arretierung des Gaseintrittskanals 4 geschieht dadurch, dass der Kragen 56 in der T-Nutpartie-obere Hälfte 56a (ersichtlich aus Fig. 10) und der Kragen 62 in der T-Nutpartie-untere Hälfte 62a (ersichtlich aus Fig. 12) geführt sind. Die radiale gleitende Befestigung des Turbinenabdeckringes 8 gegenüber dem Tragkörper 1a kann durch eine bereits vorne beschriebene Variante erreicht werden; ebenso die allgemeine Abdichtung des Gasraumes.

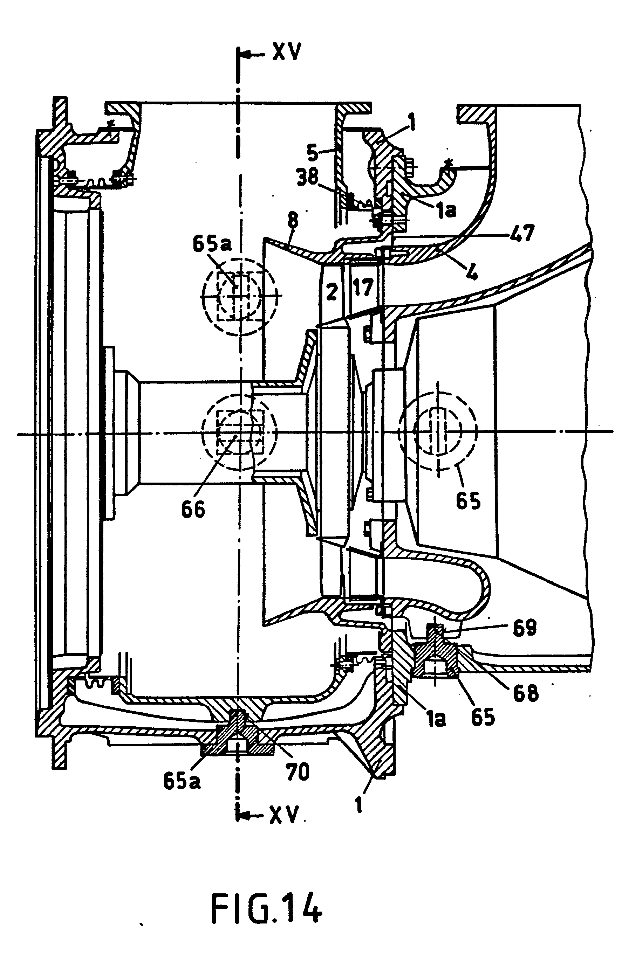

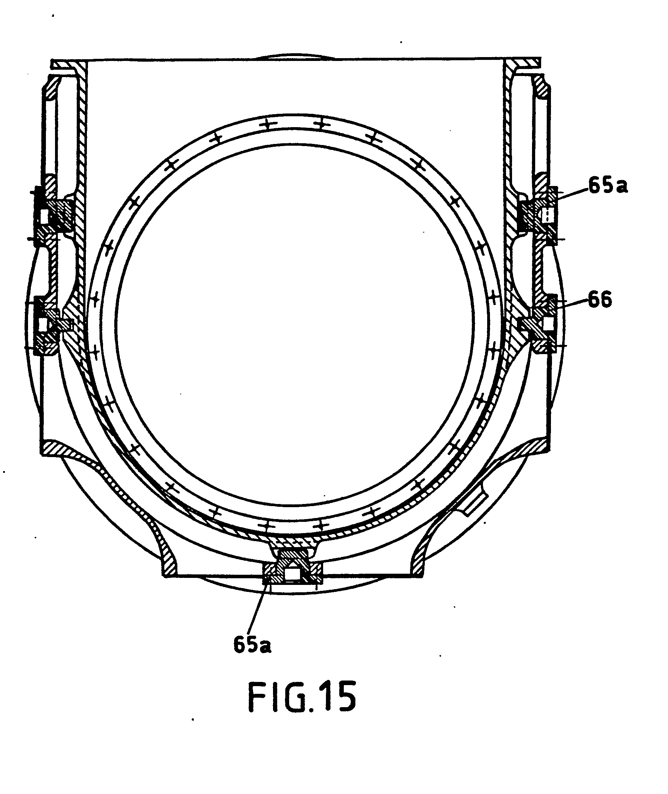

Fig. 14, 15 zeigen eine weitere Variante, wie die axiale Arretierung des Gaseintrittskanals 4 mit dem Abgaskanal 5 zustande kommen kann. Wiederum ist der Gaseintrittskanal 4 auf Pratzen abgestützt, wie aus Fig. 2 ersichtlich ist. Die axiale Führung des Gaseintrittskanals 4 gegenüber dem Tragkörper 1a wird durch mindestens drei radial gleitende Keilbolzen 65 erstellt, welche an der runden Parte des Tragkörpers 1a angeflanscht sind, wobei die keilförmigen Vorsätze 68 der Keilbolzen 65 in eine entsprechende Nut 69 des Gaseintrittskanals 4 hineinragen. Die axiale Arretierung des Abgaskanals 5 gegenüber dem Tragkörper 1 wird ebenfalls durch drei radial gleitende Keilbolzen 65a bewerkstelligt, welche in ihrer Funktionsweise sich analog verhalten (Nute 70), wie dies gut aus Fig. 15 hervorgeht. Die zwei achsia gleitenden Keilbolzen 66 hingegen haben die Aufgabe, die Querkräfte zu übernehmen. Selbstverständlich können die radial- und achsialgleitenden Keilbolzen 65a und 66 im oberen Bereich zu jeweils einem einzigen Element integriert werden, d.h. die Keilbolzen sind kreuzförmig auszubilden. Dadurch wäre es zum Beispiel möglich, den achsial gleitenden Keilbolzen 66 kreuzförmig zu erstellen und den seitiggleichen radial gleitenden Keilbolzen 65 demnach zu eliminieren.

Die Lösung der radialen gleitenden Bewegung von Gaseintrittskanal 4 und Turbinenabdeckring 8 gegenüber dem kalten Tragkörper 1 resp. 1a geht aus dem vorangehenden beschriebenen Beispiel hervor und ist deshalb in diesen Fig. (14, 15) nicht mehr speziell gezeigt und erläutert. Das Gesagte gilt hinsichtlich Beschreibung auch für die Abdichtung der Gasräume.

**Patentansprüche**

1. Ungekühlter Turbolader mit radialer Anströmung, im wesentlichen bestehend aus einem äusseren kalten und starren Tragkörper (1, 1a), einer Turbine (2), einem mit einem Anströmungsstutzen (4a) versehenen Gaseintrittskanal (4), einem Abgaskanal (5), dadurch gekennzeichnet, dass der Gaseintrittskanal (4) mindestens zwei im Betrieb horizontal und senkrecht zur Richtung des Anströmungsstutzens (4a) liegende Pratzen (34) aufweist, deren Ebene die Mittelachse der Turbine bzw. des Gaseintrittskanals (4) enthält und welche sich auf Konsolen ($R_1$, $R_2$) des Tragkörpers (1, 1a) frei abstützen, wobei der Kraftschluss zwischen Pratzen (34) und Konsolen ($R_1$, $R_2$) von der senkrecht auf die Verbindung Pratzen/Konsolen wirkenden Anströmungskraft erzeugt wird, und wobei der Gaseintrittskanal (4) einen Zentriernocken (35) trägt, der in Vertikalebene symmetriach um 90° zu den Pratzen (34) versetzt ist, diametral gegenüberliegend zum Anströmungsstutzen (4a) des Gaseintrittskanals (4) liegt und in einer Aussparung (35a) des Tragkörpers (1, 1a) in einem Abstand (c) von der Ebene der Pratzen (34) geführt ist.

2. Ungekühlter Abgasturbolader nach Anspruch 1, dadurch gekennzeichnet, dass Gaseintrittskanal (4) und Tragkörper (1a) mit mindestens drei Schulerschrauben (37) axial und mit entsprechender Zahl Mitnehmerplättchen (36) radial verbunden sind, wobei der Abgaskanal (5) mindestens drei Bolzen (40) trägt, wodurch ein Turbinenabdeckring (8), der die strömungsmässige Fortsetzung des Gaseintrittskanals (4) über die Turbine (2) hinaus bildet, am Abgaskanal (5) radial gleiten kann.

3. Abgasturbolader nach Anspruch 1 oder 2, dadurch gekennzeichnet, dass Gaseintrittskanal (4) und Tragkörper (1a) mit mindestens zwei Ringsegmenten (41) verbunden sind, wobei die Ringsegmente (41) im Gaseintrittskanal (4) eingelassen und im Tragkörper (1a) durch eine Stufe (42) und einen Verriegelungsring (45) eingeklemmt sind.

4. Abgasturbolader nach Anspruch 1 oder 2, dadurch gekennzeichnet, dass der Tragkörper (1a) einen Ring (51) trägt, der mit einer Anzahl Erhöhungen (52) versehen ist, die mit Aussparungen (53) im Gaseintrittskanal (4) einen Bajonettverschluss bilden.

5. Abgasturbolader nach Anspruch 1, dadurch gekennzeichnet, dass der Gaseintrittskanal (4) mit einem oberen Kragen (56), durch einen Teilumfangswinkel (α) gebildet, und einem unteren Kragen (62), durch einen Teilumfangswinkel (β) gebildet, versehen ist, wobei die Kragen (56, 62) in entsprechenden Nuten (56a, 62a) des Tragkörpers (1a) axial geführt sind.

6. Abgasturbolader nach Anspruch 1, dadurch gekennzeichnet, dass einer oder beide Tragkörper (1 und 1a) je mit mindestens drei radial gleitenden Keilbolzen (65) versehen sind, die in Nuten (69, 70) des Gaseintrittskanals (4) resp. Abgaskanals (5) axial geführt sind, wobei zusätzlich mindestens je zwei achsial gleitende Keilbolzen (66) die Querkräfte übernehmen.

## Claims

1. Uncooled turbocharger with radial inflow, substantially comprising an outer cold and rigid supporting body (1, 1a), à turbine (2), a gas intake duct (4), provided with an inflow nozzle (4a), and an exhaust gas duct (5), characterized in that the gas intake duct (4) has at least two claws (34), which during operation lie horizontally and perpendicular to the direction of the inflow nozzle (4a), the plane of which claws contains the centre axis of the turbine or of the gas intake duct (4) and which claws are supported freely on brackets ($R_1$, $R_2$) of the supporting body (1, 1a), the frictional connection between claws (34) and brackets ($R_1$, $R_2$) being produced by the incoming flow force acting perpendicularly on the claws/brackets connection, and the gas intake duct (4) bearing a centring cam (35), which is offset in the vertical plane symmetrically by 90° with respect to the claws (34), lies diametrically opposite the inflow nozzle (4a) of the gas intake duct (4) and is guided in a recess (35a) of the supporting body (1, 1a) at a distance (c) from the plane of the claws (34).

2. Uncooled exhaust gas turbocharger according to Claim 1, characterized in that gas intake duct (4) and supporting body (1a) are connected axially by at least three shoulder screws (37) and radially by a corresponding number of small dog plates (36), the exhaust gas duct (5) bearing at least three bolts (40), whereby a turbine shroud ring (8), which forms the continuation in terms of flow of the gas intake duct (4) beyond the turbine (2), can slide radially on the exhaust gas duct (5).

3. Exhaust gas turbocharger according to Claim 1 or 2, characterized in that gas intake duct (4) and supporting body (1a) are connected by at least two annular segments (41), the annular segments (41) being recessed in the gas intake duct (4) and clamped in the supporting body (1a) by a step (42) and a locking ring (45).

4. Exhaust gas turbocharger according to Claim 1 or 2, characterized in that the supporting body (1a) bears a ring (51), which is provided with a number of elevations (52), which form a bayonet closure with recesses (53) in the gas intake duct (4).

5. Exhaust gas turbocharger according to Claim 1, characterized in that the gas intake duct (4) is provided with an upper collar (56), formed by a segment angle (α), and with a lower collar (62), formed by a segment angle (β), the collars (56, 62) being axially guided in corresponding grooves (56a, 62a) of the supporting body (1a).

6. Exhaust gas turbocharger according to Claim 1, characterized in that one or both supporting bodies (1 and 1a) are each provided with at least three radially sliding wedge bolts (65), which are guided axially in grooves (69, 70) of the gas intake duct (4) or exhaust gas duct (5), respectively, at least two axially sliding wedge bolts (66) each additionally taking over the transverse forces.

## Revendications

1. Turbocompresseur non refroidi balayé par un flux radial, constitué essentiellement d'une enveloppe extérieure froide et rigide (1, 1a), d'une turbine (2), d'un conduit d'entrée de gaz (4) pourvu d'une tubulure de flux de balayage (4a), et d'un conduit de gaz d'échappement (5), caractérisé en ce que le conduit d'entrée de gaz (4) présente au moins deux griffes (34) qui, en service, sont disposées horizontalement et perpendiculairement à la direction de la tubulure de flux de balayage (4a), dont le plan passe par l'axe central de la turbine ou du conduit d'entrée de qaz (4) et qui prennent appui librement sur des consoles ($R_1$, $R_2$) de l'enveloppe (1, 1a), le transfert de force entre les griffes (34) et les consoles ($R_1$, $R_2$) étant effectué par la force de balayage qui agit perpendiculairement sur la jonction entre les griffes et les consoles, et le conduit d'entrée de gaz (4) présentant une saillie de centrage (35) qui est décalée dans le plan vertical symétriquement de 90° par rapport aux griffes (34) et diamétralement opposée à la tubulure de flux de balayage (4a) du conduit d'entrée de gaz (4) et qui est guidée dans un évidement (35a) de l'enveloppe (1, 1a) à une distance (c) du plan des griffes (34).

2. Turbocompresseur à gaz d'échappement non refroidi suivant la revendication 1, caractérisé en ce que le conduit d'entrée de gaz (4) et l'enveloppe (1a) sont reliés axialement par au moins trois vis à épaulement (37) et radialement par un nombre correspondant de plaquettes d'entraînement (36), le conduit de gaz d'échappement (5) portant au moins trois doigts (40) de sorte que l'anneau de garde de turbine (8) qui forme le prolongement d'écoulement du conduit d'entrée de gaz (4) au-delà de la turbine (2) peut coulisser radialement.

3. Turbocompresseur à gaz d'échappement suivant la revendication 1 ou 2, caractérisé en ce que le conduit d'entrée de gaz (4) et l'enveloppe (1a) sont reliés par au moins deux segments d'anneau (41), les segments d'anneau (41) étant soudés dans le conduit d'entrée de gaz (4) et étant serrés dans l'enveloppe (1a) par un ressaut (42) et un anneau de verrouillage (45).

4. Turbocompresseur à gaz d'échappement suivant la revendication 1 ou 2, caractérisé en ce que l'enveloppe (1a) porte un anneau (51) qui est pourvu d'un certain nombre de saillies (52) qui forment un verrouillage à baïonnette avec des évidements (53) du conduit d'entrée de qaz (4).

5. Turbocompresseur à gaz d'échappement suivant la revendication 1, caractérisé en ce que le conduit d'entrée de gaz (4) est pourvu d'un collet supérieur (56) formé par un angle périphérique partiel (α) et d'un collet inférieur (62) formé par un angle périphérique partiel (β), les collets (56, 62) étant guidés axialement dans des gorges correspondantes (56a, 52a) de l'enveloppe (1a).

6. Turbocompresseur à gaz d'échappement suivant la revendication 1, caractérisé en ce que l'une et/ou l'autre des deux enveloppes (1 et 1a) sont pourvues chacune d'au moins trois boulons-clavettes coulissant radialement (65) qui sont guidés axialement dans des gorges (69, 70) du conduit d'entrée de gaz (4) ou du conduit de gaz d'échappement (5), au moins deux boulons-clavettes (66) supplémentaires coulissant axialement supportent en outre chaque fois les forces transversales.

FIG.1

FIG.3

FIG.2

0118051

FIG.4

5

V

14

19

13

40

11

8

2

17

38

39

37

36

1a

4

V

FIG.5

36

37

FIG.6

FIG.7

0 118 051

FIG. 8

FIG. 9

9

FIG.10

FIG.11

FIG.12

FIG.13

FIG.14

**FIG.15**